# EUROPEAN PATENT APPLICATION

(11) **EP 4 161 157 A1**
(43) Date of publication of application: **05.04.2023**
(21) Application number: 20956562.1
(22) Date of filing: 10.10.2020
(51) Int. Cl.: H04W 48/04

(54) **NETWORK SELECTION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LU, Fei, Dongguan, Guangdong 523860 (CN); CHIN, Chenho, Dongguan, Guangdong 523860 (CN)
(74) Representative: RGTH
(86) International application number: PCT/CN2020/120249
(87) International publication number: WO 2022/073247

(57) **Abstract**

Embodiments of the present application relate to the technical field of communications and provide a network selection method and apparatus, a device, and a storage medium. The method comprises: a terminal device determines current first location information of the terminal device; the terminal device selects from a candidate network information set the candidate network information corresponding to the current first location information, the candidate network information set comprising the correspondence between the first location information and the candidate network information, and the candidate network information being used for indicating at least one PLMN for satellite communication; and the terminal device performs network selection according to the candidate network information corresponding to the current first location information. In the embodiments of the present application, differences in legitimate monitoring requirements at different locations are fully considered, thus achieving differential configurations of available PLMNs according to different locations and improving the accuracy and effectiveness of the terminal device selecting the PLMN for satellite communication.

## Description

### TECHNICAL FIELD

The embodiments of the present disclosure relate to the field of communication technology, and in particular to a method, apparatus and device for network selection, and a storage medium.

### BACKGROUND

The 3rd Generation Partnership Project (3GPP) introduces Non Terrestrial Network (NTN) technology into 5G New Radio (NR) system.

The NTN generally provides communication services to ground users by means of satellite communication. Compared with the terrestrial cellular network communication system, the NTN system has many unique advantages. First of all, the NTN system is not limited by the geographic area of users. Since a satellite can cover a large area of the ground, and the satellite can orbit around the earth, every corner of the earth can be covered by the NTN system theoretically. Secondly, the NTN system has great social value. The NTN system can cover remote mountainous areas and poor and backward countries or regions at a lower cost, so that people in these areas can enjoy advanced voice communication and mobile Internet technology, for facilitating narrowing the digital gap in relative to the developed areas and promoting the development of these areas. Thirdly, a distance of the NTN system is long, and the communication cost does not increase apparently with the increase of communication distance. Finally, the NTN system has high stability and is not affected by natural disasters.

Because of the wide coverage of the satellite network, a single satellite may cover multiple areas, and some area among the covered areas may not have a ground receiving station corresponding to the satellite. When the terminal device is located in the area where there is no ground receiving station corresponding to the satellite, if the network of the satellite is selected for satellite communication, the legal monitoring requirements in the area may be violated. Therefore, in the NTN technology, a further discussion and research is required regarding how to perform the network selection to achieve satellite communication.

### SUMMARY

The embodiments of the present disclosure provide a method, an apparatus and a device for network selection, and a storage medium. The technical solutions are described as follows.

In one aspect, an embodiment of the present disclosure provides a method for network selection, which is applied to a terminal device, the method includes operations as follows.

A current first location information of the terminal device is determined.

A candidate network information corresponding to the current first location information is selected from a candidate network information set, and the candidate network information set includes correspondences between pieces of first location information and pieces of candidate network information, and the candidate network information indicates at least one candidate public land mobile network (PLMN) for satellite communication.

Network selection is performed according to the candidate network information corresponding to the current first location information.

In another aspect, an embodiment of the present disclosure provides a method for network selection, which is applied to a network device, the method includes operations as follows.

A candidate network information set is transmitted to a terminal device, and the candidate network information set is used for selecting a network used by the terminal device for satellite communication.

The candidate network information set includes correspondences between pieces of first location information and pieces of candidate network information, and the candidate network information indicates at least one candidate PLMN for satellite communication.

In another aspect, an embodiment of the present disclosure provides a device for network selection, which is provided in a terminal device, the device includes an information determining module, an information selecting module, and a network selecting module.

The information determining module is configured to determine current first location information of the terminal device.

The information selecting module is configured to select, from a candidate network information set, candidate network information corresponding to the current first location information, and the candidate network information set including correspondences between pieces of first location information and pieces of candidate network information, and the candidate network information indicates at least one candidate PLMN for satellite communication.

The network selecting module is configured to perform network selection according to the candidate network information corresponding to the current first location information.

In another aspect, an embodiment of the present disclosure provides a device for network selection, which is provided in a network device, the device includes a set sending module.

The set sending module is configured to transmit a candidate network information set to the terminal device, and the candidate network information set is used for selecting a network used by the terminal device for satellite communication.

The candidate network information set includes correspondences between pieces of first location information and pieces of candidate network information, and the candidate network information indicates at least one candidate PLMN for satellite communication.

In another aspect, an embodiment of the disclosure provides a terminal device, and the terminal device includes a processor and a transceiver connected with the processor.

The processor is configured to determine current first location information of the terminal device.

The processor is further configured to select, from a candidate network information set, candidate network information corresponding to the current first location information, and the candidate network information set includes correspondences between pieces of first location information and the pieces of candidate network information, and the candidate network information indicates at least one candidate PLMN for satellite communication.

The processor is further configured to perform network selection according to the candidate network information corresponding to the current first location information.

In another aspect, an embodiment of the disclosure provides a network device, which includes a processor and a transceiver connected with the processor.

The transceiver is configured to transmit a candidate network information set to a terminal device, and the candidate network information set is used for selecting a network used by the terminal device for satellite communication.

The candidate network information set includes correspondences between pieces of first location information and pieces of candidate network information, and the candidate network information indicates at least one candidate public land mobile network (PLMN ) for satellite communication.

In another aspect, an embodiment of the present disclosure provides a computer-readable storage medium having stored thereon a computer program. The computer program, when being executed by a processor of a terminal device, implements the method for network selection at the terminal device side as described above.

In another aspect, an embodiment of the present disclosure provides a computer-readable storage medium having stored thereon a computer program. The computer program, when being executed by a processor of a network device, implements the method for network selection at the network device side as described above.

The technical solutions provided by the embodiments of the present disclosure may achieve the following beneficial effects.

A current location is determined by the terminal device, then the available PLMNs corresponding to the current location are determined, and the PLMN used for satellite communication is selected from the available PLMNs corresponding to the current location, so that the terminal device can flexibly determine the available PLMNs for network selection according to the current location. In addition, in the embodiments of the present disclosure, a candidate network information set for indicating the available PLMNs is configured for the terminal device. The candidate network information set includes correspondences between locations and pieces of candidate network information indicating the available PLMNs. Compared with the fact that due to configuring a single fixed PLMN list for the terminal device, the terminal device cannot flexibly perform network selection in respect to the legal monitoring requirements for different locations, a difference of legal monitoring requirements for different locations is fully considered in the embodiments of the disclosure, and available PLMNs are differentially configured according to different locations, thereby avoiding the terminal device from being unable to realize satellite communication because the selected PLMN does not meet the legal monitoring requirement for the location of the terminal device, and improving the accuracy and effectiveness of selecting the PLMN for satellite communication by the terminal device.

### BRIEF DESCRIPTION OF DRAWINGS

In order to explain the technical solutions in the embodiments of the present disclosure more clearly, the drawings required in the description of embodiments will be briefly described below. It is apparent that the drawings described below only illustrate some embodiments of the disclosure. Other drawings may also be obtained by those skilled in the art according to these drawings without creative work.
FIG. 1 is a schematic diagram of a communication system according to an embodiment of the present disclosure.
FIG. 2 is a schematic diagram of a cellular communication system according to an embodiment of the present disclosure.
FIG. 3 is a schematic diagram of an NTN communication system according to an embodiment of the present disclosure.
FIG. 4 is a schematic diagram of network coverage of a satellite according to an embodiment of the present disclosure.
FIG. 5 is a flowchart of a method for network selection according to an embodiment of the present disclosure.
FIG. 6 is a schematic diagram of a configuration mode of a candidate network information set according to an embodiment of the present disclosure.
FIG. 7 is a schematic diagram of a network selection mode according to an embodiment of the present disclosure.
FIG. 8 is a schematic diagram of a method for network selection according to an embodiment of the present disclosure.
FIG. 9 is a schematic diagram of a method for network selection according to another embodiment of the present disclosure.
FIG. 10 is a schematic diagram of a method for network selection according to yet another embodiment of the present disclosure.
FIG. 11 is a block diagram of a device for network selection according to an embodiment of the present disclosure.
FIG. 12 is a block diagram of a device for network selection according to another embodiment of the present disclosure.
FIG. 13 is a block diagram of a terminal device according to an embodiment of the present disclosure.
FIG. 14 is a block diagram of a network device according to an embodiment of the present disclosure.

### DETAILED DESCRIPTION

In order to make the object, technical solutions and advantages of the present disclosure more clearly, the embodiments of the present disclosure are described in further detail below with reference to the accompanying drawings.

The network architecture and the service scenario described in the embodiments of the disclosure are intended to more clearly describe the technical solutions of the embodiments of the disclosure and should not be construed as a limit to the technical solutions provided by the embodiments of the present disclosure. Those skilled in the art can see that the technical solutions provided by the embodiments of the present disclosure are also applicable to similar technical problems with the evolution of the network architecture and the emergence of new business scenarios.

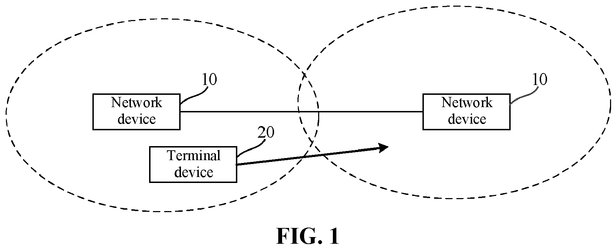

Referring to FIG. 1 which is a schematic diagram of a communication system provided by an embodiment of the present disclosure, the communication system may include a network device 10 and a terminal device 20.

The network device 10 is used to provide a wireless communication service for the terminal device 20. A connection may be established between the network device 10 and the terminal device 20 through an air interface, so that communications including signaling and data interactions can be performed through the connection. The number of network devices 10 may be more than one, and communication between two adjacent network devices 10 may be performed in a wired or wireless manner. The terminal device 20 may be switched between different network devices 10, i.e. establishing a connection with different network devices 10.

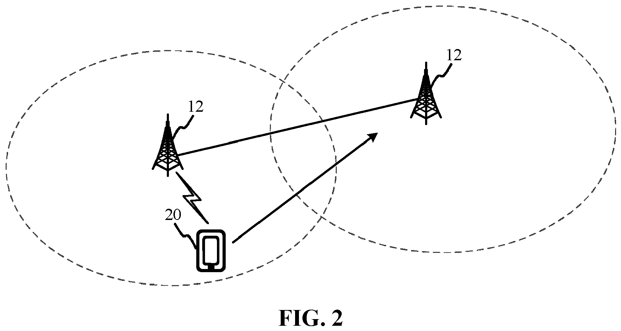

In an example as shown in FIG. 2, taking a cellular communication network as an example, the network device 10 in the cellular communication network may be a base station 12. The base station 12 is a device deployed in an access network to provide a wireless communication function for the terminal device 20. The base station 12 may include various forms of macro base stations, micro base stations, relay stations, access points and the like. In systems with different wireless access technologies, the names of devices having network device functions may be different, for example, in 5G NR (New Radio) systems, the devices are called gNodeB or gNB. With the evolution of communication technology, the name "base station" may change. For convenience of description, the above-mentioned device providing wireless communication functions for the terminal device 20 is collectively referred to as a network device in embodiments of the present disclosure,.

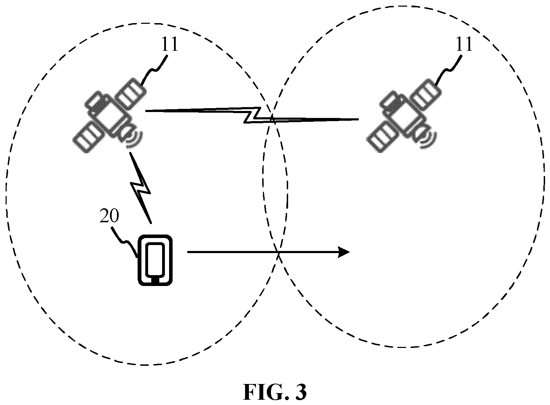

In another example as shown in FIG. 3, taking an NTN network as an example, the network device 10 in the NTN network may be a satellite 11. The satellite 11 may cover a certain range of ground area and provide wireless communication services for the terminal devices 20 in the ground area. In addition, the satellites 11 can orbit the earth, and communication coverage of different areas on the earth's surface can be realized through arranging multiple satellites 11.

Compared with the terrestrial cellular communication networks, satellite communication has many unique advantages. First of all, the satellite communication is not limited by user's geographic area, for example, general land communication cannot cover areas such as oceans, mountains, deserts, etc., where communication device cannot be arranged or there is no communication coverage due to sparse population. However, in the satellite communication, because a satellite can cover a large ground area and the satellite can orbit the earth, every corner of the earth can be covered by the satellite communication theoretically. Secondly, the satellite communication has great social value. The satellite communication can cover remote mountainous areas and poor and backward countries or regions at a lower cost, so that people in these areas can enjoy advanced voice communication and mobile Internet technology, for facilitating narrowing the digital gap in relative to the developed areas and promoting the development of these areas. Thirdly, the satellite communication distance is long, and the communication cost does not increase significantly with the increase of communication distance. Finally, the satellite communication has high stability and is not affected by natural disasters.

Communication satellites are divided into Low-Earth Orbit (LEO) satellites, Medium-Earth Orbit (MEO) satellites, Geostationary Earth Orbit (GEO) satellites, High Elliptical Orbit (HEO) satellites and so on according to different orbital altitudes. The LEO and GEO are mainly studied at present.

### 1. LEO

The altitude of the LEO satellites ranges from 500km to 1500km, and the orbital period of the LEO satellites approximately ranges from 1.5 hours to 2 hours. The signal propagation delay of single hop communication between users is generally less than 20ms. The maximum satellite visual time is 20 minutes. The signal propagation distance is short, the link loss is less, and there is no high requirement for the transmission power for user terminals.

### 2. GEO

The geostationary earth orbit satellite has an orbit height of 35786 km and a period of 24 hours orbiting around the earth. The signal propagation delay of single hop communication between users is generally 250ms.

In order to ensure the coverage of the satellite and improve the system capacity of the entire satellite communication system, the satellite covers the ground by using multiple beams, and one satellite can form dozens or even hundreds of beams to cover the ground. One beam of the satellite can cover an ground area with a diameter of tens to hundreds of kilometers.

It should be noted that the terminal device 20 in the embodiment of the present disclosure may include various handheld devices, vehicle-mounted devices, wearable devices, computing devices with wireless communication functions or other processing devices connected to a wireless modem, as well as various forms of User equipment (UE), Mobile Station (MS), terminal devices, and the like. For convenience of description, the above-mentioned devices are collectively referred to as terminal devices in embodiments of the present disclosure.

Additionally in embodiments of the present disclosure, the terms "network" and "system" are commonly used interchangeably but the meanings thereof are understood by those skilled in the art.

When a terminal device accesses a network, the terminal device needs to select an appropriate network for network communication. Alternatively, in the embodiments of the present disclosure, the network selection performed by the terminal device is a PLMN selection. In one example, in a cellular communication network, the terminal device may perform network selection according to a configured priority order of PLMNs.
(1) Home PLMN.
(2) PLMN in a "User Controlled PLMN Selector with Access Technology" configuration list.
(3) PLMN in the "Operator Controlled PLMN Selector with Access Technology" configuration list.

That is, the terminal device preferentially selects the home PLMN. When the terminal device is located outside the coverage area of the home PLMN, a scanning timer is started. Optionally, the terminal device periodically scans the home PLMN, or the PLMN in the "User Controlled PLMN Selector with Access Technology" configuration list, or the PLMN in the "Operator Controlled PLMN Selector with Access Technology" configuration list.

Alternatively, when the terminal device is turned on, or when the terminal device enters an area under a network coverage from an area in which there is no network coverage, the terminal device first selects a registered PLMN (RPLMN) stored thereon. When the terminal device cannot select a RPLMN, other PLMNs are selected.

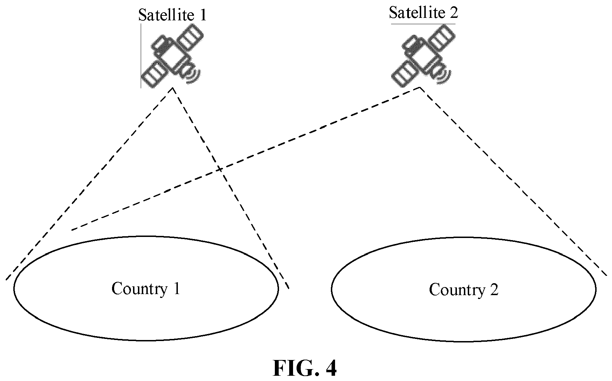

Unlike the cellular network communication system, in the NTN communication system, a single satellite may cover multiple regions due to the wide network coverage of the satellite. As shown in FIG. 4, satellite 1 covers country 1 and country 2, and satellite 2 covers country 1. Thus, when the terminal device is located in country 1, the terminal device is in the network coverage of satellite 1 and satellite 2.

However, in some cases, no ground receiving station corresponding to the satellite may be provided in some areas of a network coverage area of the satellite. For example, as shown in FIG. 4, satellite 1 has no corresponding ground receiving station in country 1, the terminal device is unable to access a core network of country 1, and thus violate a legal monitoring requirement of country 1 if the terminal device selects the network of satellite 1 for satellite communication. In addition, as shown in FIG. 4, when the terminal device is located in country 1, the terminal device is in the network coverage of satellite 1 and satellite 2. Assuming that a home PLMN of the terminal device is the network of satellite 1, the terminal device may preferentially select the satellite 1 according to the method for network selection in the cellular communication system, even if the terminal device is located in the country 1. Since the satellite 1 has no ground receiving station in the country 1, the terminal device may violate the legal monitoring requirement of the country 1 if the terminal device selects the network of the satellite 1 for satellite communication.

Based on this, the embodiments of the present disclosure provide a method for network selection regarding how to perform network selection for satellite communication in an NTN communication system. According to the technical solutions provided by the embodiments of the disclosure, when the terminal device is located in a certain area, an available network corresponding to the area is selected, thereby avoiding from being unable to access the core network of the area via the selected network, and ensuring effectiveness and legality of satellite communication. The technical solutions of the embodiments of the disclosure are described in detail by several method embodiments.

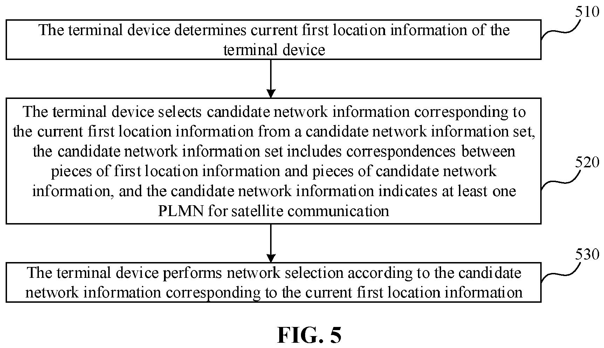

Referring to FIG. 5 which is a flowchart of a method for network selection provided by an embodiment of the present disclosure, the method may be applied to the NTN communication system described above, and may include the following operations S510 to S530.

In S510, the terminal device determines current first location information of the terminal device.

In order to select an available network corresponding to an area where the terminal device is located, the terminal device determines the area where the terminal device is currently located. In the embodiment of the present disclosure, the terminal device determines current first location information thereof, and the current first location information indicates the area where the terminal device is currently located. The embodiment of the present disclosure does not limit the content of the current first location information. Optionally, the current first location information includes a current geographical location of the terminal device. Alternatively, the current first location information includes a country where the terminal device is currently located. Alternatively, the current first location information includes an administrative division where the terminal device is currently located, or, the current first location information includes a service cell where the terminal device is currently located, or, the current first location information includes a communication system where the terminal device is currently located.

In one example, the current first location information includes at least one of a geographic location or first Mobile Country Code (MCC). The first MCC is broadcasted by a cellular network where the terminal device is located. That is, the current location information of the terminal device may include a geographic location and/or a first MCC.

The geographic location can be obtained through positioning. Optionally, the geographic location can be obtained through at least one of the following positioning modes: a network positioning mode, a satellite positioning mode, a real-time dynamic positioning mode or a precise single point positioning mode. Among them, the network positioning mode is based on the network connected by the terminal device. The satellite positioning mode is based on observation satellite information obtained by the terminal, or may also be referred to as a Global Positioning System (GPS) positioning mode. The real-time dynamic positioning mode is based on differential data obtained by the terminal, and the precision single-point positioning mode is based on precision navigation messages obtained by the terminal.

The first MCC is a mobile country code of the country where the terminal device is currently located. The first MCC can be sent to the terminal device through a cellular network where the terminal device is located. That is, the cellular network, a coverage area of which includes the terminal device, sends the first MCC to the terminal device, so that the terminal device knows its current location. Alternatively, the first MCC is carried in a system message, that is, the first MCC is broadcasted by a cellular network where the terminal device is located.

In an embodiment of the present disclosure, when the terminal device is located in its home country (i.e. a country corresponding to the home PLMN), the terminal device can preferentially select the home PLMN. When the terminal device is located in a country other than the home country of the terminal device (i.e. the terminal device is in a roaming state), the terminal device can perform network selection according to the method for network selection provided by the embodiments of the present disclosure. Based on this, S510 described above in one example includes determining the current first location information in response to that the terminal device is located in a country other than the home country of the terminal device.

It can be seen from the above introduction that when the terminal device is turned on or re-enters the network coverage area, the terminal device preferentially selects the registered network (such as RPLMN). In an embodiment of the disclosure, when the terminal device is turned on or re-enters the network coverage area, if the terminal device is located in the country corresponding to the registered network, the terminal device can preferentially select the registered network. If the terminal device is located in a country other than the country corresponding to the registered network, the terminal device can perform network selection according to the method for network selection provided by the embodiments of the disclosure. Based on this, the above operation S510 in another example includes determining the current first location information in response to that the terminal device is turned on or re-enters the network coverage area, and the terminal device is located in a country other than the country corresponding to the registered network of the terminal device.

In S520, the terminal device selects candidate network information corresponding to the current first location information from a candidate network information set. The candidate network information set includes correspondences between pieces of first location information and pieces of candidate network information, and the candidate network information indicates at least one PLMN for satellite communication.

After determining the current first location information, the terminal device can further obtain a candidate network information set, and select candidate network information corresponding to the current first location information from the candidate network information set, for subsequently performing network selection based on the candidate network information. The candidate network information set includes correspondences between pieces of first location information and pieces of candidate network information, that is, at least one piece of first location information is configured in the candidate network information set, and each piece of first location information corresponds to a piece of candidate network information. Regarding a specific configuration mode of the candidate network information set, reference may be made to the following embodiments, which is not be repeated here.

The embodiments of the disclosure do not limit the configuration mode of the candidate network information set. Optionally, the candidate network information set is carried in the Subscriber Identity Module (SIM) card of the terminal device. For example, the candidate network information set is configured by the operator and written into the SIM card, and the terminal device can obtain the candidate network information set by using the SIM card produced by the operator. Alternatively, the candidate network information set is sent from the network device to the terminal device. For example, the network device preconfigures the candidate network information set, and then sends the candidate network information set to the terminal device through a Non-Access Stratum (NAS) message and the like. The terminal device can obtain the candidate network information set after receiving the NAS message. Based on this, in one example, before the above operation S520, the network device transmits the candidate network information set to the terminal device. Optionally, the candidate network information set is carried in NAS signaling.

The candidate network information indicates at least one PLMN for satellite communication, based on which, the terminal device subsequently select a PLMN. In one example, the candidate network information includes second location information and mobile network information. Optionally, the second location information includes a second MCC, which is capable of being broadcasted by a satellite network. The mobile network information includes a Mobile Network Code (MNC). Optionally, in a case that the second location information is the second MCC and the mobile network information is the MNC, an identifier (ID) of the candidate PLMN may be represented by a sum of the MCC and the MNC, that is, PLMN ID: MCC + MNC.

In S530, the terminal device performs network selection according to the candidate network information corresponding to the current first location information.

The candidate network information corresponding to the current first location information may indicate at least one PLMN, and the at least one PLMN is an available PLMN corresponding to the area where the terminal device is currently located. After selecting the candidate network information corresponding to the current first location information from the candidate network information set, the terminal device can perform network selection according to at least one PLMN indicated by the candidate network information corresponding to the current first location information. That is, the terminal device selects a PLMN used for satellite communication from the at least one PLMN. Regarding the other descriptions of network selection performed by terminal device, reference may be made to the following method embodiments, which are not be repeated here.

To sum up, according to the technical solutions provided by the embodiments of the disclosure, the current location is determined by the terminal device, then the available PLMNs corresponding to the current location are determined, and the PLMN used for satellite communication is selected from the available PLMNs corresponding to the current location. In this way, the terminal device can flexibly determine the available PLMNs for network selection according to the current location. In addition, in the embodiments of the present disclosure, a candidate network information set for indicating the available PLMNs is configured for the terminal device. The candidate network information set includes correspondences between locations and pieces of candidate network information indicating the available PLMNs. Compared with the fact that due to configuring a single fixed PLMN list for the terminal device, the terminal device cannot flexibly perform network selection in respect to the legal monitoring requirements for different locations, a difference of legal monitoring requirements for different locations is fully considered in the embodiments of the disclosure, and available PLMNs are differentially configured according to different locations, thereby avoiding the terminal device from being unable to realize satellite communication because the selected PLMN does not meet the legal monitoring requirement for the location of the terminal device, and improving the accuracy and effectiveness of selecting the PLMN for satellite communication by the terminal device.

A manner for configuring the candidate network information set is described below.

Optionally, the candidate network information set includes n subsets, and n is a positive integer.

In an embodiment of the present disclosure, the candidate network information set can be divided into multiple subsets according to different pieces of first location information. Assuming that there are n pieces of first location information, the candidate network information set also includes n subsets, and n is a positive integer. For example, the first location information includes a MCC (first MCC) broadcasted by a cellular communication network, and different first MCCs characterize different countries. If there are n first MCCs, the candidate network information set includes n subsets, each subset corresponding to one first MCC.

In an example, in a case that the first location information is consistent with the second location information, the i-th subset of the n subsets includes a correspondence between the i-th piece of first location information and at least one piece of mobile network information, and i is a positive integer less than or equal to n.

Optionally, the first location information being consistent with the second location information includes that the meaning of the first location information bieng consistent with that of the second location information. For example, the first location information includes the first MCCs that characterize different countries, and the second location information includes the second MCCs, and the second MCCs are capable of being broadcasted by the satellite network. If the second MCCs can also characterize different countries, the first MCCs and the second MCCs are consistent with each other, that is, the first location information is consistent with the second location information.

In a case that the first location information is consistent with the second location information, the candidate network information set can be directly configured by the first location information and the mobile network information. For an i-th subset of the n subsets of the candidate network information set, the i-th subset corresponds to the i-th piece of first location information, and the i-th subset includes a correspondence between the i-th piece of first location information and at least one piece of mobile network information.

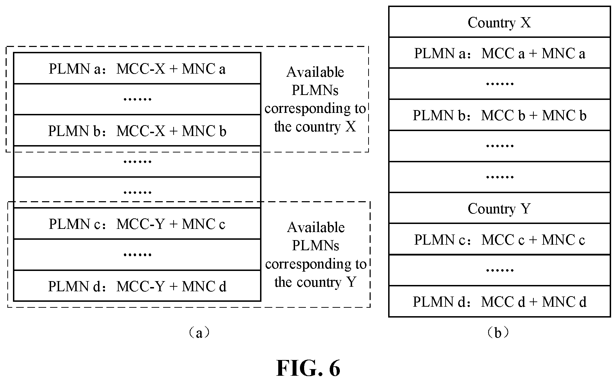

For example, assuming that the first location information includes the first MCCs and the mobile network information includes the MNCs, as shown in FIG. 6(a), the candidate network information set includes n subsets, each subset corresponds to one first MCC. That is, each subset corresponds to one country, and each subset indicates available PLMNs corresponding to one country. For country X, the subset corresponding to the country X includes a correspondence between MCC-X and at least one MNC, and MCC-X is combined with different MNCs to indicate different PLMNs. For country Y, the subset corresponding to the country Y includes a correspondence between MCC-Y and at least one MNC, and MCC-Y is combined with different MNCs to indicate different PLMNs. In conjunction with FIG. 6(a), the available PLMNs respectively corresponding to country X and country Y are configured as follows.

Available PLMNs corresponding to country X: PLMN a: MCC-X + MNC a to PLMN b: MCC-X + MNC b.

The available PLMNs corresponding to country Y: PLMN c: MCC-Y + MNC c to PLMN d: MCC-Y + MNC d.

In another example, in a case that the first location information is inconsistent with the second location information, the i-th subset of the n subsets includes a correspondence of the i-th piece of first location information with at least one piece of second location information and at least one piece of mobile network information, and i is a positive integer less than or equal to n.

Optionally, the first location information being inconsistent with the second location information includes that the meaning of the first location information is inconsistent with that of the second location information. For example, the first location information includes the first MCCs that characterize different countries, and the second location information includes the second MCCs broadcasted by the satellite network. If the second MCCs cannot characterize different countries, for example, the second MCCs are dedicated MCCs broadcasted by the satellite network, the first MCCs are inconsistent with the second MCCs, that is, the first location information is inconsistent with the second location information.

In a case that the first location information is inconsistent with the second location information, the candidate network information set cannot be directly configured by using the first location information and the mobile network information, and is configured by taking the second location information into account, in addition to the first location information and the mobile network information. For an i-th subset of n subsets of the candidate network information set, the i-th subset corresponds to the the i-th piece of first location information, then the i-th subset includes a correspondence of the i-th piece of first location information with at least one piece of second location information and at least one piece of mobile network information.

For example, assuming that the first location information includes the first MCCs, the second location information includes the second MCCs, and the mobile network information includes MNCs, as shown in Fig. 6(b), the candidate network information set includes n subsets, each subset corresponds to one first MCC, that is, each subset corresponds to one country, and each subset indicates available PLMNs corresponding to the country. For country X, a subset corresponding to the country X includes a correspondence of MCC-X with at least one second MCC and at least one MNC, and the MCC-X is combined with different second MCCs and different MNCs to indicate different PLMNs. For country Y, the subset corresponding to the country Y includes a correspondence of MCC-Y with at least one second MCC and at least one MNC, and the MCC-Y is combined with different second MCCs and different MNCs to indicate different PLMNs. In conjunction with FIG. 6(b), available PLMNs respectively corresponding to country X and country Y are configured as follows.

The available PLMNs corresponding to country X: PLMN a: MCC a + MNC a to PLMN b: MCC b + MNC b.

The available PLMNs corresponding to country Y: PLMN c: MCC c + MNC c to PLMN d: MCC d + MNC d.

It should be noted that, in practical applications, only the candidate network information set when the first location information is consistent with the second location information can be configured for the terminal device. Alternatively, only the candidate network information set when the first location information is inconsistent with the second location information can be configured for the terminal device. Alternatively, both the candidate network information set when the first location information is consistent with the second location information and the candidate network information set when the first location information is inconsistent with the second location information can be configured for the terminal device. The specific configuration mode can be determined by comprehensively considering the capability of the terminal device, the broadcasting mode of the satellite network and other factors, which is not limited in the embodiment of the present disclosure.

To sum up, according to the technical solutions provided by the embodiments of the disclosure, a candidate network information set indicating the available PLMNs is configured according to different locations, each subset of the candidate network information set corresponds to one location and indicates the available PLMNs corresponding to the location, so that the terminal device can quickly find the available PLMNs corresponding to the location according to the location subsequently. In addition, in the embodiment of the disclosure, different configuration modes are provided according to whether the broadcasting location of the cellular network is consistent with the broadcasting location of the satellite network, thereby adapting to different broadcasting modes of the satellite network, and improving the compatibility of candidate network information sets.

The process of network selection for the terminal device is described below.

Optionally, the candidate network information corresponding to the current first location information indicates m PLMNs, m is a positive integer.

In an embodiment of the present disclosure, the candidate network information corresponding to the current first location information indicates m PLMNs, m is a positive integer, and the m PLMNs are available PLMNs corresponding to the current first location information.

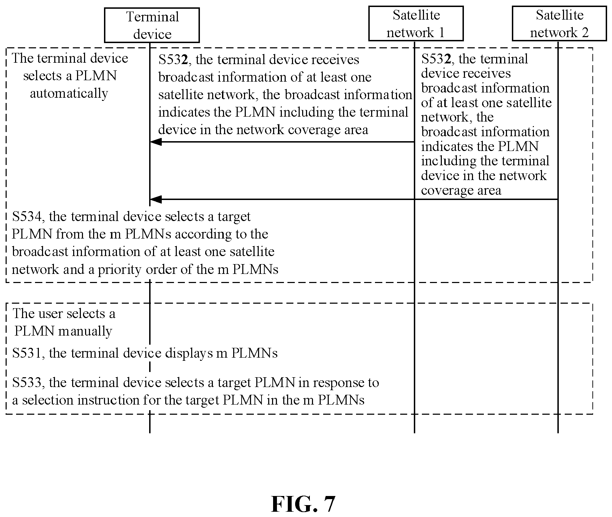

In one example, as shown in FIG. 7, the above operation S530 includes the following sub operations.

In S532, the terminal device receives broadcast information of at least one satellite network. The broadcast information indicates the PLMN including the terminal device in the network coverage area.

At least one satellite network may broadcast within the network coverage area thereof, and the broadcast information indicates the PLMN of the satellite, within a network coverage area of which the terminal device is included. The specific content of the broadcast information is not limited in the embodiments of the present disclosure. Optionally, the broadcast information includes an identification of at least one PLMN, such as at least one PLMN ID.

In operation S534, the terminal device selects a target PLMN from the m PLMNs according to the broadcast information of at least one satellite network and a priority order of the m PLMNs.

When the terminal device enters the network coverage area of the satellite, the terminal device receives the broadcast information of the satellite network. Then, the terminal device selects the target PLMN (that is, a PLMN used for satellite communication) from the m PLMNs according to the broadcast information of at least one satellite network and the priority order of m PLMNs. Alternatively, the priority order of the m PLMNs is indicated by the candidate network information set. For example, as shown in FIG. 6, for each subset of the candidate information set, an order of PLMNs indicated in the subset is the priority order of the PLMNs indicated in the subset. After receiving the broadcast information of the satellite network, the terminal device can obtain accessible PLMNs, and then select the target PLMN according to the accessible PLMNs and the priority order of the available PLMNs corresponding to the current location.

For example, assuming that the broadcast information of at least one satellite network indicates two accessible PLMNs including PLMN 1 and PLMN 2, and the available PLMNs corresponding to the current location of the terminal device are m PLMNs and m is 4, and the priority order of the available PLMNs is PLMN 3, PLMN 1, PLMN 2 and PLMN 4, the terminal devices selects PLMN1 as the target PLMN according to the broadcast information of at least one satellite network and the priority order of the m PLMNs.

In another example, as shown in FIG. 7, the operation S530 includes the following sub operations.

In S531, the terminal device displays m PLMNs.

After the terminal device determines the current location and selects the available PLMNs (m PLMNs) corresponding to the current location, the terminal device can display the m PLMN in the user interface to present to the user, so as to enable the user for independent selection.

In S533, the terminal device selects a target PLMN in response to a selection instruction for the target PLMN in the m PLMNs.

The user selects the target PLMN from the m PLMN displayed on the terminal device, and the terminal device can receive a selection instruction of a user for the target PLMN, and then the terminal device selects the target PLMN for satellite communication. The mode of triggering the terminal device to receive the selection instruction for the target PLMN is not limited in the embodiments of the disclosure. Optionally, the terminal device displays options corresponding to m PLMNs respectively, and the user touches the option corresponding to the target PLMN to trigger the terminal device to receive the selection instruction for the target PLMN. Optionally, the user triggers the terminal device to receive the selection instruction for the target PLMN through voice, gesture, AI (Artificial Intelligence) and the like.

To sum up, according to the technical solutions provided by the embodiments of the present disclosure, the terminal device selects the PLMN used for satellite communication from the available PLMNs corresponding to the current location according to the priority order of the available PLMNs corresponding to the current location and the broadcast information received from the satellite network, thereby realizing automatic selection of the PLMN. In addition, according to the technical solutions provided by the embodiments of the disclosure, the available PLMNs corresponding to the current location are presented to the user through the terminal device, so that the user can independently select the PLMN used in satellite communication, thereby meeting more operation requirements of the user.

In the following, the technical solutions of the present disclosure are described in combination with several examples.

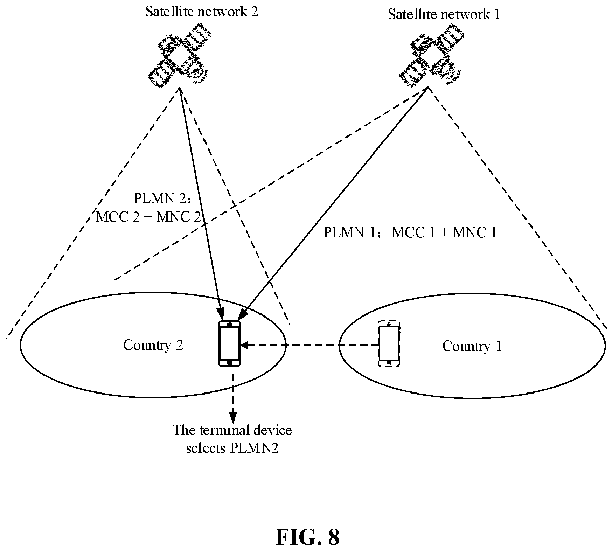

Referring to FIG. 8, a schematic diagram of a method for network selection provided by an embodiment of the present disclosure is shown.

It is assumed that the satellite network including the terminal device within the network coverage area includes satellite network 1 and satellite network 2. The satellite network 1 covers country 1 and country 2, and the broadcast information of the satellite network 1 includes PLMN 1: MCC 1 + MNC 1.. The satellite network 2 covers country 1, and the broadcast information of satellite network 2 includes PLMN 2: MCC 2 + MNC 2. Assuming that the home country of the terminal device is country 1 and the home PLMN is PLMN 1. Assuming that PLMN 1 does not have a ground receiving station in country 2, then PLMN 1 is not available in country 2.

When the terminal device is currently located in the country 2, the terminal device is located in a country other than the home country, that is, the terminal device is in a roaming state. In this case, when the terminal device performs network selection, only the available PLMN corresponding to the country 2 is used for network selection, that is, the terminal device selects PLMN2. Furthermore, the terminal device stops running a scanning timer to avoid preferentially selecting the unavailable home PLMN in country 2, that is, avoid selecting PLMN 1.

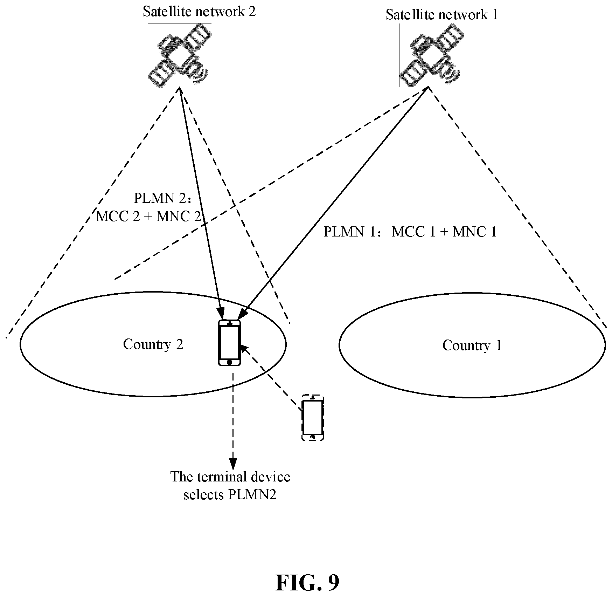

Referring to FIG. 9, a schematic diagram of a method for network selection provided by another embodiment of the present disclosure is shown.

It is assumed that the satellite network including the terminal device within the network coverage area includes satellite network 1 and satellite network 2. The satellite network 1 covers country 1 and country 2, and the broadcast information of the satellite network 1 includes PLMN 1: MCC 1 + MNC 1. The satellite network 2 covers country 1, and the broadcast information of satellite network 2 includes PLMN 2: MCC 2 + MNC 2. Assuming that the registered PLMN stored by the terminal device is PLMN 1, and assuming that PLMN 1 does not have a ground receiving station in country 2, PLMN 1 is not available in country 2.

When the terminal device is turned on or re-enters the network coverage area, as shown in FIG. 9, when the terminal device enters country 2 from the non-network coverage area, the terminal device does not preferentially select the stored registered PLMN, that is, the terminal device does not preferentially select PLMN 1. Instead, the terminal device performs network selection according to the available PLMN corresponding to country 2, that is, the terminal device selects PLMN 2.

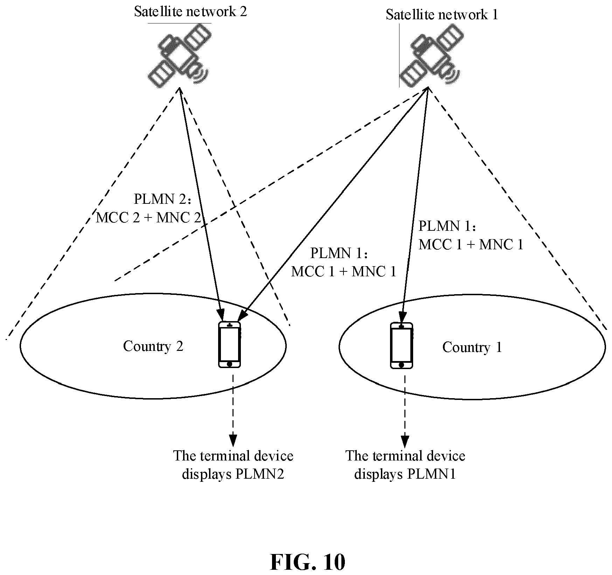

Referring to FIG. 10, a schematic diagram of a method for network selection provided by another embodiment of the present disclosure is shown.

It is assumed that the satellite network including the terminal device within the network coverage area includes satellite network 1 and satellite network 2. The satellite network 1 covers country 1 and country 2, and the broadcast information of the satellite network 1 includes PLMN 1: MCC 1 + MNC 1. The satellite network 2 covers country 1, and the broadcast information of satellite network 2 includes PLMN 2: MCC 2 + MNC 2. Assuming that PLMN 1 does not have a ground receiving station in country 2, PLMN 1 is not available in country 2.

In a case that the terminal device is located in country 1, the terminal device presents the available PLMN corresponding to country 1 to the user, that is, PLMN 1 is presented to the user for selection. In a case that the terminal device is located in country 2, the terminal device presents the available PLMN corresponding to country 2 to the user, that is, PLMN 2 is presented to the user for selection.

It should be noted that in the above method embodiments, the method for network selection provided by the present disclosure is mainly explained from the perspective of interaction between the terminal device and the network device. The above operations executed by the terminal device can be independently implemented as a method for network selection at the terminal device side. The above operations executed by the network device can be independently implemented as a method for network selection at the network device side.

The device embodiment of the present disclosure is described below, which can be configured to execute the method embodiment of the present disclosure. For details not disclosed in the device embodiment of the present disclosure, reference can be made to the method embodiment of the present disclosure.

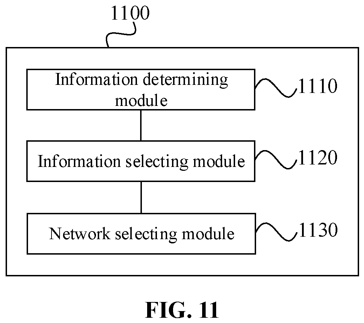

Referring to FIG. 11, a block diagram of a device for network selection provided by an embodiment of the present disclosure is shown. The device has a function of realizing the method example at the terminal device side described above, and the function can be realized through hardware or by executing corresponding software through hardware. The device may be the terminal device described above or may be arranged in the terminal device. As shown in FIG. 11, the device 1100 may include an information determining module 1110, an information selecting module 1120 and a network selecting module 1130.

The information determining module 1110 is configured to determine the current first location information of the terminal device.

The information selecting module 1120 is configured to select candidate network information corresponding to the current first location information from a candidate network information set. The candidate network information set includes correspondences between pieces of first location information and pieces of candidate network information, and the candidate network information indicates at least one PLMN for satellite communication.

The network selecting module 1130 is configured to perform network selection according to the candidate network information corresponding to the current first location information.

In one example, the information determining module 1110 is configured to determine the current first location information in a case that the terminal device is located in a country other than a home country of the terminal device.

In one example, the information determining module 1110 is configured to determine the current first location information in a case that the terminal device is turned on or re-entered into a network coverage area and the terminal device is located in a country other than the country corresponding to the registered network of the terminal device.

In one example, the first location information includes at least one of a geographic location or a first MCC. The first MCC is an MCC broadcasted by the cellular network where the terminal device is located.

In one example, the candidate network information includes pieces of second location information and pieces of mobile network information.

In one example, the candidate network information set includes n subsets, and n is a positive integer. In a case that the first location information is consistent with the second location information, the i-th subset of the n subsets includes a correspondence between the the i-th piece of first location information and at least one piece of mobile network information, and the i is a positive integer less than or equal to n.

In one example, the candidate network information set includes n subsets, and n is a positive integer. In a case that the first location information is inconsistent with the second location information, the i-th subset of the n subsets includes a correspondence of the i-th piece of first location information with at least one piece of second location information and at least one piece of mobile network information, and i is a positive integer less than or equal to n.

In one example, the second location information includes a second MCC, and the second MCC is capable of being broadcasted by a satellite network.

In one example, the mobile network information includes the MNC.

In one example, the candidate network information corresponding to the current first location information indicates m PLMNs, m is a positive integer. The network selecting module 1130 is configured to receive broadcast information of at least one satellite network, and the broadcast information indicates the PLMN, within a network coverage area of which the terminal device is included. The network selecting module 1130 is configured to select a target PLMN from the m PLMNs according to the broadcast information of the at least one satellite network and a priority order of the m PLMNs.

In one example, the candidate network information corresponding to the current first location information indicates m PLMNs, m is a positive integer. The network selecting module 1130 is configured to display the m PLMNs, and select a target PLMN upon receiving a selection instruction for the target PLMN in the m PLMNs.

In one example, the candidate network information set is carried in a SIM card of the terminal device. Alternatively, the candidate network information set is carried in NAS signaling sent by the network device.

To sum up, according to the technical solutions provided by the embodiment of the disclosure, the current location is determined by the terminal device, then the available PLMNs corresponding to the current location are determined, and the PLMN used for satellite communication is selected from the available PLMNs corresponding to the current location. In this way, the terminal device can flexibly determine the available PLMNs for network selection according to the current location. In addition, in the embodiments of the present disclosure, a candidate network information set for indicating the available PLMNs is configured for the terminal device. The candidate network information set includes correspondences between locations and pieces of candidate network information indicating the available PLMNs. Compared with the fact that due to configuring a single fixed PLMN list for the terminal device, the terminal device cannot flexibly perform network selection in respect to the legal monitoring requirements for different locations, a difference of legal monitoring requirements for different locations is fully considered in the embodiments of the disclosure, and available PLMNs are differentially configured according to different locations, thereby avoiding the terminal device from being unable to realize satellite communication because the selected PLMN does not meet the legal monitoring requirement for the location of the terminal device, and improving the accuracy and effectiveness of selecting the PLMN for satellite communication by the terminal device.

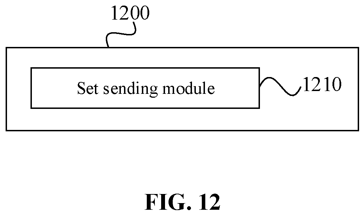

Referring to FIG. 12, a block diagram of a device for network selection provided by an embodiment of the present disclosure is shown. The device has a function of realizing the method example at the terminal device side described above, and the function can be realized through hardware or by executing corresponding software through hardware. The device may be the network device described above or may be arranged in the network device. As shown in FIG. 12, the device 1200 may include a set sending module1210.

A set sending module 1210 is configured to transmit a candidate network information set to the terminal device. The candidate network information set is used for selecting a network used by the terminal device for satellite communication, and the candidate network information set includes correspondences between pieces of first location information and pieces of candidate network information, and the candidate network information indicates at least one candidate PLMN for satellite communication.

In one example, the location information includes at least one of a geographic location or a first MCC. The first MCC is an MCC broadcasted by a cellular network where the terminal device is located.

In one example, the candidate network information includes pieces of second location information and pieces of mobile network information.

In one example, the candidate network information set includes n subsets, and n is a positive integer. In a case that the first location information is consistent with the second location information, the i-th subset of the n subsets includes a correspondence between the i-th piece of first location information and at least one piece of mobile network information, and the i is a positive integer less than or equal to n.

In one example, the candidate network information set includes n subsets, and n is a positive integer. In a case that the first location information is inconsistent with the second location information, the i-th subset of the n subsets includes a correspondence of the i-th piece of first location information with at least one piece of second location information and at least one piece of mobile network information, and i is a positive integer less than or equal to n.

In one example, the second location information includes a second MCC, and the second MCC is capable of being broadcasted by a satellite network.

In one example, the mobile network information includes an MNC.

In one example, the candidate network information set is carried in NAS signaling.

To sum up, according to the technical solutions provided by the embodiments of the disclosure, a candidate network information set indicating the available PLMNs is configured for the terminal device by the network device. The candidate network information set includes correspondences between locations and pieces of candidate network information indicating the available PLMNs. Compared with the fact that due to configuring a single fixed PLMN list for the terminal device, the terminal device cannot flexibly perform network selection in respect to the legal monitoring requirements for different locations, a difference of legal monitoring requirements for different locations is fully considered in the embodiments of the disclosure, and available PLMNs are differentially configured according to different locations, thereby avoiding the terminal device from being unable to realize satellite communication because the selected PLMN does not meet the legal monitoring requirement for the location of the terminal device, and improving the accuracy and effectiveness of selecting the PLMN for satellite communication by the terminal device.

It should be noted that, when the device provided by the embodiment realizes its function, the device is described by taking the above division of each function module as an example. In practical applications, the above functions can be allocated to different function modules according to actual needs, that is, the content structure of the device can be divided into different function modules to implement all or part of the functions described above.

With regard to the device in the above embodiments, the mode of performing operations by various modules has been described in detail in the method embodiments, and will not be described in detail here.

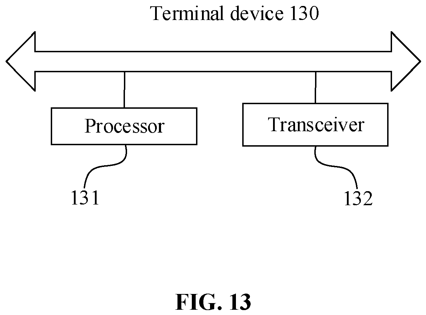

Referring to FIG. 13, a schematic structural diagram of the terminal device 130 provided by an embodiment of the present disclosure is shown. For example, the terminal device is configured to execute the method for network selection at the terminal device side described above. Specifically, the terminal device 130 may include a processor 131, and a transceiver 132 connected to the processor 131.

The processor 131 includes one or more processing cores. The processor 131 executes various functional applications and information processing by running software programs and modules.

The transceiver 132 includes a receiver and a transmitter. Alternatively, the transceiver 132 is a communication chip.

In one example, the terminal device 130 further includes a memory and a bus. The memory is connected to the processor through a bus. The memory is configured to store a computer program, and the processor is configured to execute the computer program to implement the various operations performed by the terminal device in the method embodiments described above.

Further, the memory can be implemented by any type of volatile or non-volatile storage device or a combination thereof. The volatile or nonvolatile storage devices include, but are not limited to: a Random Access Memory(RAM) and a Read-Only Memory (ROM), an Erasable Programmable Read-Only Memory (EPROM), an Electrically Erasable Programmable Read-Only Memory (EEPROM), a flash memory or other solid-state storage technology, a Compact Disc Read-Only Memory (CD-ROM), a Digital Video Disc (DVD) or other optical storage, a magnetic tape cassette, a magnetic tape, a magnetic disk storage or other magnetic storage devices.

The processor 131 is configured to determine current first location information of the terminal device.

The processor 131 is further configured to select candidate network information corresponding to the current first location information from a candidate network information set. The candidate network information set includes correspondences between pieces of first location information and pieces of candidate network information, and the candidate network information indicates at least one PLMN for satellite communication.

The processor 131 is also configured to perform network selection according to the candidate network information corresponding to the current first location information.

In one example, the processor 131 is configured to determine the current first location information in response to that the terminal device is located in a country other than a home country of the terminal device.

In one example, the processor 131 is configured to determine the current first location information in response to that the terminal device is turned on or re-entered into a network coverage area and the terminal device is located in a country other than a country corresponding to a registered network of the terminal device.

In one example, the first location information includes at least one of a geographic location or a first MCC. The first MCC is an MCC broadcasted by the cellular network where the terminal device is located.

In one example, the candidate network information includes pieces of second location information and pieces of mobile network information.

In one example, the candidate network information set includes n subsets, and n is a positive integer. In a case that the first location information is consistent with the second location information, the i-th subset of the n subsets includes a correspondence between the i-th piece of first location information and at least one piece of mobile network information, and the i is a positive integer less than or equal to n.

In one example, the candidate network information set includes n subsets, and n is a positive integer. In a case that the first location information is inconsistent with the second location information, the i-th subset of the n subsets includes a correspondence of the i-th piece of first location information with at least one piece of second location information and at least one piece of mobile network information, and i is a positive integer less than or equal to n.

In one example, the second location information includes a second MCC, and the second MCC is an MCC capable of being broadcasted by a satellite network.

In one example, the mobile network information includes an MNC.

In one example, candidate network information corresponding to the current first location information indicates m PLMNs, m is a positive integer. The processor 131 is configured to receive broadcast information of at least one satellite network, and the broadcast information indicates the PLMN including the terminal device in the network coverage. A target PLMN is selected from the m PLMNs according to the broadcast information of the at least one satellite network and a priority order of the m PLMNs.

In one example, candidate network information corresponding to the current first location information indicates m PLMNs, m is a positive integer. The processor 131 is configured to display the m PLMNs. Upon receiving a selection instruction for a target PLMN in the m PLMNs, the target PLMN is selected.

In one example, the candidate network information set is carried in a SIM card of the terminal device. Alternatively, the candidate network information set is carried in the NAS signaling sent by the network device.

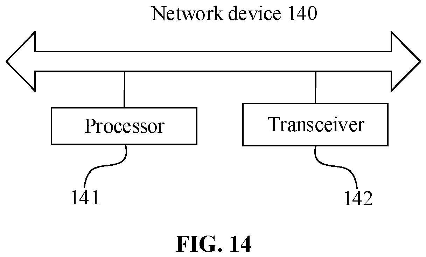

Referring to FIG. 14, a schematic structural diagram of a network device 140 provided by an embodiment of the present disclosure is shown. For example, the network device is configured to perform the method for network selection at the network device side described above. In particular, the network device 140 may include a processor 141, and a transceiver 142 connected to the processor 141.

The processor 141 includes one or more processing cores. The processor 141 executes various functional applications and information processing by running software programs and modules.

The transceiver 142 includes a receiver and a transmitter. Alternatively, the transceiver 142 is a communication chip.

In one example, the network device 140 further includes a memory and a bus. The memory is connected to the processor through a bus. The memory is configured to store a computer program, and the processor is configured to execute the computer program to implement the various operations performed by the network device in the above method embodiments.

In addition, the memory may be implemented by any type of volatile or non-volatile storage device, or a combination thereof. The volatile or non-volatile storage device includes but is not limited to: an RAM and an ROM, an EPROM, an EEPROM, a flash memory or other solid-state storage technology, a CD-ROM, a DVD or other optical storage, a magnetic tape cassette, a magnetic tape, a magnetic disk storage or other magnetic storage device.

The transceiver 142 is configured to transmit a candidate network information set to the terminal device. The candidate network information set is used for selecting a network used by the terminal device for satellite communication. The candidate network information set includes correspondences between pieces of first location information and pieces of candidate network information. The candidate network information indicates at least one candidate PLMN for satellite communications.

In one example, the location information includes at least one of a geographic location or a first MCC. The first MCC is an MCC broadcasted by a cellular network where the terminal device is located.

In one example, the candidate network information includes second location information and mobile network information.

In one example, the candidate network information set includes n subsets, and n is a positive integer. In a case that the first location information is consistent with the second location information, the i-th subset of the n subsets includes a correspondence between the i-th piece of first location information and at least one piece of mobile network information, and the i is a positive integer less than or equal to n.

In one example, the candidate network information set includes n subsets, and n is a positive integer. In a case that that the first location information is inconsistent with the second location information, the i-th subset of the n subsets includes a correspondence of the i-th piece of first location information with at least one piece of second location information and at least one piece of mobile network information, and i is a positive integer less than or equal to n.

In one example, the second location information includes a second MCC, and the second MCC is an MCC capable of being broadcasted by a satellite network.

In one example, the mobile network information includes an MNC.

In one example, the candidate network information set is carried in NAS signaling.

The embodiment of the disclosure also provides a computer-readable storage medium having stored thereon a computer program. The computer program, when executed by the processor of the terminal device, implements the method for network selection at the terminal device side as described above.

The embodiment of the disclosure also provides a computer-readable storage medium having stored thereon a computer program. The computer program, when executed by the processor of the terminal device, implements the method for network selection at the network device side as described above.

The embodiment of the disclosure also provides a chip, and the chip includes a programmable logic circuit and/or a program instruction. The chip, when run on the terminal device, implements the method for network selection at the terminal device side as described above.

The embodiment of the disclosure also provides a chip, and the chip includes a programmable logic circuit and/or a program instruction. The chip, when run on the network device, implements i the method for network selection at the network device side as described above.

The embodiment of the present disclosure also provides a computer program product. The computer program product, when run on a terminal device, enables a computer to execute the method for network selection at the terminal device side as described above.

The embodiment of the present disclosure also provides a computer program product. The computer program product, when run on a network device, enables a computer to execute the method for network selection at the network device side as described above.

Those skilled in the art will appreciate that in one or more of the above examples, the functions described in the embodiments of the present disclosure may be implemented in hardware, software, firmware or any combination thereof. When implemented in software, these functions may be stored in a computer-readable medium or transmitted as one or more instructions or codes on the computer-readable medium. The computer-readable medium includes a computer storage medium and a communication medium, and the communication medium includes any medium capable of transmitting a computer program from one place to another. The storage medium may be any available medium that can be accessed by a general-purpose or dedicated computer.

The above description is only an exemplary embodiment of the disclosure and is not intended to limit the disclosure. Any modification, equivalent replacement, improvement, etc. made within the spirit and principles of this disclosure shall be included in the scope of protection of this disclosure.

## Claims

1. A method for network selection, applied to a terminal device, comprising:
determining current first location information of the terminal device;
selecting, from a candidate network information set, candidate network information corresponding to the current first location information, wherein the candidate network information set comprises correspondences between pieces of first location information and pieces of candidate network information, and the candidate network information indicates at least one candidate public land mobile network (PLMN) for satellite communication; and
performing network selection according to the candidate network information corresponding to the current first location information.

2. The method of claim 1, wherein the determining the current first location information of the terminal device comprises:
in response to that the terminal device is located in a country other than a home country of the terminal device, determining the current first location information.

3. The method of claim 1 or 2, wherein the determining the current first location information of the terminal device comprises:
in response to that the terminal device is turned on or re-enters a network coverage area, and the terminal device is located in a country other than a country corresponding to a registered network of the terminal device, determining the current first location information.

4. The method of any one of claims 1 to 3, wherein the first location information comprises at least one of a geographical location or a first mobile country code (MCC), wherein the first MCC is broadcasted by a cellular network where the terminal device is located.

5. The method of any one of claims 1 to 4, wherein the candidate network information comprises second location information and mobile network information.

6. The method of claim 5, wherein the candidate network information set comprises n subsets, n being a positive integer, and
in response to that the first location information is consistent with the second location information, an i-th subset of the n subsets comprises a correspondence between the i-th piece of first location information and at least one piece of mobile network information, i being a positive integer less than or equal to n.

7. The method of claim 5, wherein the candidate network information set comprises n subsets, n being a positive integer, and
in response to that the first location information is inconsistent with the second location information, an i-th subset of the n subsets comprises a correspondence of the i-th piece of first location information with at least one piece of second location information and at least one piece of mobile network information, i being a positive integer less than or equal to n.

8. The method of any one of claims 5 to 7, wherein the second location information comprises a second MCC, and the second MCC is capable of being broadcasted by a satellite network.

9. The method of any one of claims 5 to 8, wherein the mobile network information comprises a mobile network code (MNC).

10. The method of any one of claims 1 to 9, wherein the candidate network information corresponding to the current first location information indicates m PLMNs, m being a positive integer, and
wherein the performing network selection according to the candidate network information corresponding to the current first location information comprises:
receiving broadcast information of at least one satellite network, wherein the broadcast information indicates a PLMN comprising the terminal device in a network coverage area; and
selecting a target PLMN from the m PLMNs according to the broadcast information of the at least one satellite network and a priority order of the m PLMNs.

11. The method of any one of claims 1 to 9, wherein the candidate network information corresponding to the current first location information indicates m PLMNs, m being a positive integer, and
wherein the performing network selection according to the candidate network information corresponding to the current first location information comprises:
displaying the m PLMNs; and
upon receiving a selection instruction for a target PLMN in the m PLMNs, selecting the target PLMN.

12. The method of any one of claims 1 to 11, wherein the candidate network information set is carried in a subscriber identification module (SIM) card of the terminal device, or the candidate network information set is carried in non-access stratum (NAS) signaling sent by the network device.

13. A method for network selection, applied to a network device, comprising:
transmitting a candidate network information set to a terminal device, wherein the candidate network information set is used for selecting a network used by the terminal device for satellite communication; and
wherein the candidate network information set comprises correspondences between pieces of first location information and pieces of candidate network information, and the candidate network information indicates at least one candidate public land mobile network (PLMN ) for the satellite communication.

14. The method of claim 13, wherein the location information comprises at least one of a geographic location or a first mobile country code (MCC), wherein the first MCC is broadcasted by a cellular network where the terminal device is located.

15. The method of claim 13 or 14, wherein the candidate network information comprises second location information and mobile network information.

16. The method of claim 15, wherein the candidate network information set comprises n subsets, n being a positive integer, and
in response to that the first location information is consistent with the second location information, an i-th subset of the n subsets comprises a correspondence between the i-th piece of first location information and at least one piece of mobile network information, i being a positive integer less than or equal to n.

17. The method of claim 15, wherein the candidate network information set comprises n subsets, n being a positive integer;
in response to that the first location information is inconsistent with the second location information, an i-th subset of the n subsets comprises a correspondence of the i-th piece of first location information with at least one piece of second location information and at least one piece of mobile network information, i being a positive integer less than or equal to n.

18. The method of any one of claims 15 to 17, wherein the second location information comprises a second MCC, and the second MCC is capable of being broadcasted by a satellite network.

19. The method of any one of claims 15 to 18, wherein the mobile network information comprises a mobile network code (MNC).

20. The method of any one of claims 13 to 19, wherein the candidate network information set is carried in non-access stratum (NAS) signaling.

21. A device for network selection provided in a terminal device, comprising:
an information determining module configured to determine current first location information of the terminal device;
an information selecting module configured to select, from a candidate network information set, candidate network information corresponding to the current first location information, wherein the candidate network information set comprises correspondences between pieces of first location information and pieces of candidate network information, and the candidate network information indicates at least one candidate public land mobile network (PLMN) for satellite communication; and
a network selecting module configured to perform network selection according to the candidate network information corresponding to the current first location information.

22. The device of claim 21, wherein the information determining module is configured to:
in response to that the terminal device is located in a country other than a home country of the terminal device, determine the current first location information.

23. The device of claim 21 or 22, wherein the information determining module is configured to:
in response to that the terminal device is turned on or re-enters a network coverage area, and the terminal device is located in a country other than a country corresponding to a registered network of the terminal device, determine the current first location information.

24. The device of any one of claims 21 to 23, wherein the first location information comprises at least one of a geographical location or a first mobile country code (MCC), wherein the first MCC is broadcasted by a cellular network where the terminal device is located.

25. The device of any one of claims 21 to 24, wherein the candidate network information comprises second location information and mobile network information.

26. The device of claim 25, wherein the candidate network information set comprises n subsets, n being a positive integer, and
in response to that the first location information is consistent with the second location information, an i-th subset of the n subsets comprises a correspondence between the i-th piece of first location information and at least one piece of mobile network information, i being a positive integer less than or equal to n.

27. The device of claim 25, wherein the candidate network information set comprises n subsets, n being a positive integer, and
in response to that the first location information is inconsistent with the second location information, an i-th subset of the n subsets comprises a correspondence of the i-th piece of first location information with at least one piece of second location information and at least one piece of mobile network information, i being a positive integer less than or equal to n.

28. The device of any one of claims 25 to 27, wherein the second location information comprises a second MCC, and the second MCC is capable of being broadcasted by a satellite network.

29. The device of any one of claims 25 to 28, wherein the mobile network information comprises a mobile network code (MNC).

30. The device according to any one of claims 21 to 29, wherein the candidate network information corresponding to the current first location information is used to indicate m PLMNs, m being a positive integer, wherein the network selecting module is configured to:
receive broadcast information of at least one satellite network, wherein the broadcast information indicates a PLMN comprising the terminal device in a network coverage area; and
select a target PLMN from the m PLMNs according to the broadcast information of the at least one satellite network and a priority order of the m PLMNs.

31. The device of any one of claims 21 to 29, wherein the candidate network information corresponding to the current first location information indicates m PLMNs, m being a positive integer, wherein the network selecting module is configured to:
display the m PLMNs; and
upon receiving a selection instruction for a target PLMN in the m PLMNs, select the target PLMN.

32. The device of any one of claims 21 to 31, wherein the candidate network information set is carried in a subscriber identification module (SIM) card of the terminal device, or the candidate network information set is carried in non-access stratum (NAS) signaling sent by the network device.

33. A device for network selection provided in a network device, comprising:
a set sending module configured to transmit a candidate network information set to the terminal device, wherein the candidate network information set is used for selecting a network used by the terminal device for satellite communication,
wherein the candidate network information set comprises correspondences between pieces of first location information and pieces of candidate network information, and the candidate network information indicates at least one candidate public land mobile network (PLMN ) for satellite communication.

34. The device of claim 33, wherein the location information comprises at least one of a geographic location or a first mobile country code (MCC), wherein the first MCC is broadcasted by a cellular network where the terminal device is located.

35. The device of claim 33 or 34, wherein the candidate network information comprises second location information and mobile network information.

36. The device of claim 35, wherein the candidate network information set comprises n subsets, n being a positive integer, and
in response to that the first location information is consistent with the second location information, an i-th subset of the n subsets comprises a correspondence between the i-th piece of first location information and at least one piece of mobile network information, i being a positive integer less than or equal to n.

37. The device of claim 35, wherein the candidate network information set comprises n subsets, n being a positive integer, and
in response to that the first location information is inconsistent with the second location information, an i-th subset of the n subsets comprises a correspondence of the i-th piece of first location information with at least one piece of second location information and at least one piece of mobile network information, i being a positive integer less than or equal to n.

38. The device of any one of claims 35 to 37, wherein the second location information comprises a second MCC, and the second MCC is capable of being broadcasted by a satellite network.

39. The device of any one of claims 35 to 38, wherein the mobile network information comprises a mobile network code (MNC).

40. The device of any one of claims 33 to 39, wherein the candidate network information set is carried in non-access stratum (NAS) signaling.

41. A terminal device comprising: a processor, and a transceiver connected with the processor, wherein
the processor is configured to determine current first location information of the terminal device;
the processor is further configured to select, from a candidate network information set, candidate network information corresponding to the current first location information, wherein the candidate network information set comprises correspondences between pieces of first location information and the pieces of candidate network information, and the candidate network information indicates at least one public land mobile network (PLMN) for satellite communication, and
the processor is further configured to perform network selection according to the candidate network information corresponding to the current first location information.

42. A network device comprising: a processor, and a transceiver connected with the processor, wherein
the transceiver is configured to transmit a candidate network information set to a terminal device, wherein the candidate network information set is used for selecting a network used by the terminal device for satellite communication, and
wherein the candidate network information set comprises correspondences between pieces of first location information and pieces of candidate network information, wherein the candidate network information indicates at least one candidate public land mobile network (PLMN ) for the satellite communication.

43. A computer-readable storage medium having stored thereon a computer program that, when executed by a processor of a terminal device, implements the method for network selection of any one of claims 1 to 12.

44. A computer-readable storage medium having stored thereon a computer program that, when executed by a processor of a network device, implements the method for network selection of any one of claims 13 to 20.
